# EUROPEAN PATENT APPLICATION

(11) **EP 1 982 569 A1**
(43) Date of publication of application: **22.10.2008**
(21) Application number: 08380101.9
(22) Date of filing: 27.03.2008
(51) Int. Cl.: A01B 15/02, A01B 13/08, A01B 13/10

(54) **Goal plow technology (GPT)**

(30) Priority: 17.04.2007 US 736116
(71) Applicant: Bouza Gonzalez, Heriberto, Hialeah, FL 33010-6227 (US)
(72) Inventor: Bouza Gonzalez, Heriberto, Hialeah, FL 33010-6227 (US)
(74) Representative: De Pablos Riba, Julio

(57) **Abstract**

The Goal Plow Technology (GPT) is an agricultural method, with great impact on the physical and biological behavior of the ground. GPT makes horizontal cuts in the soil, without inverting the soil's layers. GPT achieves this by following the terrain's contours as originally formed by Nature. GPT's angles and devices successfully move the soil in the opposite direction of the earth's gravity. GPT is adaptable to any kind of soil, for cultivation or tillage, and can easily be used by itself, or used in combination with other farming systems. The presently existing agricultural implements destroy the natural structure of the soil. As their use diminishes, GPT will yield maximum benefits. In addition, GPT is the ideal technology for organic production, as it favors the accumulation of biomass at the ground's level. GPT helps to lessen the greenhouse effect on planet earth, this in turn, produces a great impact on the environment and on better human health; thereby, having the desired effect of turning into reality the ultimate purpose of acquiring healthy foods at affordable prices.

## Description

### FIELD OF THE INVENTION

The above referenced invention is in the field of "biological farming" for agricultural soils, it includes a set of devices and a recently developed method for agronomy.

### BACKGROUND OF THE INVENTION

Agriculture is the highest ranking natural resource of nations, and accordingly, the human activity that most influences the environment.

The ground is a living system that functions as the center of life in our planet. There is no future for any agricultural technology that ignores the relevant nature of the ground.

For centuries, mankind has cultivated the soil, literally, in the wrong direction: VERTICALLY, by means of the use of plows and disc harrows that revert, mix, and compact the natural layers of the soil, practically destroying almost all forms of life that previously existed en the ground and which created, in a natural way, the necessary nutrients to feed the plants.

As a result of the above process, we have inherited a "harmful" and sterile soil where the survival of the plants totally depends on increasing amounts of artificially created toxics (such as herbicides, fertilizers, etc), having a fossil fuel base. Due to the constant increase in the global population, the fossil fuel base is currently being depleted at an alarming rate, while its price increases at an incredible speed, making it more and more difficult to maintain the present level of needed food production.

At a global level, millions upon millions of dollars are spent on pesticides and equipment to combat the weeds. Still, the soil which we have inherited today is more compacted and full of weeds than ever before.

In the United States of America, farmers spend in excess of 5 billion dollars a year in herbicides; thereby, creating an agricultural land full of toxics, that actually end up circulating in the bodies of children and adults who consume the harvested food. From the aforesaid, we must conclude that modern agricultural technologies act upon its logical consequences, but aggravate and worsen such causes as: the soil compaction, the sprouting of weeds, and the environmental pollution. A contaminated environment cannot produce healthy foods, and is definitely not the healthy place where our children deserve to grow.

A considerable number of weed species persist in the soil throughout many years due to the characteristics of its reproduction. The weeds consist of botanical seeds and vegetative organs such as stolons, rhizomes and tubers that easily propagate. The present implements of farming eliminate the aerial part of the weeds, but when making the cut of the ground in a vertical direction, they fragment its vegetative structures, hidden in the subsoil, thereby stimulating its reproduction, specially the perennial species.

Contrary to the popular belief, the presently used farming techniques (especially the plows and disc harrows), not only defeat their purpose but also favor the source that produce the weeds. That is the most significant reason why the problem of the weeds invading the fields is becoming more and more serious, even though mankind spends millions and millions of dollars on weed control. Although in the short term, there is the false perception that the weeds have been eliminated, we conclude that though it may seem ironic, the greater number of passes that go over the soil with the present implement, the greater number of weeds that will invade the fields.

Humankind dramatically approaches a period of water and fossil fuel shortage. The present agricultural model depends almost exclusively on crude oil. The new technologies march in a direction opposite to the forces of nature, damaging the natural biological system of the grounds that during centuries have served as the base for food production. The new advantages of biotechnology will be of little use if the soil, which is the essential base of its development, stops functioning as a live system, and becomes a sterile container that depends almost exclusively on chemical products.

For instance, in order to produce one ton of nitrogen fertilizer, an energetic equivalent of 1.5 ton of diesel fuel is required. The annual consumption of this type of fertilizer in the USA is calculated at more than 12 million tons; which supposes an annual consumption in excess of 4 billions gallons of diesel fuel, which is needed only to produce this type of fertilizer.

Agriculture as we know it today will become obsolete under the new paradigm. It is not only a time for change, but a change of times where the patterns of reference, as we know it, will no longer function. Only one biological model of agriculture will be compatible with the new reality that is approaching.

The changes begin in the soil, since it is the first link of the food chain and constitutes life's foundation in our planet. Any other strategy, in which this premise is not considered, would lead us further away from the solution.

It is said that water is the blood of the earth. But even though the surface of our planet is composed of ¾ parts water, only 1% is fit for human consumption. A human being consumes 3 to 5 liters of water daily and requires between 50 to 150 liters of water daily for personal hygiene.

However, more than 500 liters of water are required to grow 1 kilogram (2.2 pounds) of grain. And in order to obtain 1 kilogram of meat from a cow, which is fed with grain, a minimum of 10.000 liters of ware are required. Agriculture uses 70% of the total water consumed on a global scale and 80% of other varieties of agricultural production depend on the amount and availability of the liquid. Unfortunately, 50% of rain water and irrigated land water is lost by evaporation due to the farming methods being used for such purpose.

The GPT should not be viewed as a simple technology change, but rather as the correction of an error that humanity has carried out for centuries, regarding the direction in which the soil should be cultivated. This will cause positive physical and biological changes in the soil, the food being produced, and in human health. This new technology will not solve all problems, but can assure that the serious problems of the environment and of the human health will not be solved, unless we first resolve the soil's problems.

### SUMMARY OF THE INVENTION

The present invention refers to a set of devices and a new method ob biological farming called GOAL PLOW TECHNOLOGY (GPT).

GPT makes a HORIZONTAL cut in the soil, without inverting its layers, following the same direction as originally formed by Nature. GPT achieves regenerative farming, which allows reconfiguring the natural porosity of the ground; reestablishing the physical and biological functioning of the farm lands; and raises and harnesses the storage of the water available for the plants. All of the above mentioned obtains a saving of 30 to 50% of the fuels used in agricultural farming and a progressive increment of the natural productivity of the soil; thereby favoring a progressive conversion towards a new model of agricultural production, less dependent of crude oil and agricultural toxics and far more favorable to human health.

GPT generates a radical change on the physical properties of the soil, by converting the ground into water storehouses, where water is stored and then gradually delivered to the plants' roots. As a result of the elimination of the compacted layers, the plant roots grow deeply into the ground, allowing for the efficient use of 80 to 90% of the rain and irrigated water. The estimated saving is more than 25% of the consumption of diesel fuel presently being utilized.

In contrast to the presently used farming technologies, which act upon its consequences, but aggravate the causes that bring about the soil's compaction and weeds, GPT has a preventive effect by eliminating both causes that give origin to such phenomena.

The systematic use of GPT contributes to gradually diminish the incidence of soil compaction and weeds, up to levels that will not affect the agricultural yield and instead decrease the use of chemicals. The most effective, economic and ecological method to prevent these problems is to avoid such causes.

The tropical soil fields which have been worked with GPT, exhibited an excellent weed control, the first year after the technology was applied without the use of herbicides, in spite of high temperatures and humidity prevailing in the cultivation of corn, soybeans, beans, carrots, and other products.

At the same time, an average of 30% increase in agricultural yields and a savings of almost $30 per acre (annually) are achieved by the reduction in the consumption of herbicides, water, fuel, and fertilizers.

The aforementioned is conditioned because GPT causes an ecological handling of the biomass, by converting the soil in a receptor of CO₂. GPT also causes the soil to store organic matter, favoring the soil's basic and biological functioning, which in turn helps to mitigate the greenhouse effect.

The trials conducted in an area of approximately 2000 acres in the San Joaquin Valley of California, USA, have demonstrated GPT's astonishing superiority over conventional farming technologies. These trials have show great savings of water and fuel, better control of weeds, increases in the yield of cereals harvested, and more than 70% reduction in dust exposure of the farm workers and rural inhabitants.

The new international energetic policy, focuses on the biological fuel production conferring, as never before, an extraordinary importance to the increase in the grounds' fertility. Presently GPT's technology is not only needed for the production of food, but also for the cultivation of bioenergetics. No preceding farming technology has had such a significant impact on energetic economy, water savings, and on the capacity of the grounds to produce healthy foods, such as GOAL PLOW TECHNOLOGY.

GPT is a new biological farming technology that allows the recovery of the oxygen and the space that the soil has lost over the centuries, due to the compacting of the space where its live phase had inhabited. Applying GPT's noble concept sets forth the biological rehabilitation of the ground is faster and more effective when it is preceded by the basic rehabilitation through GPT new technology.

GPT is highly feasible because its investment costs may be recuperated in approximately two months of operation. This is possible because of the savings in fuel, lubricants and salaries. Its versatility allows it to substitute the use of various equipments which are indispensable to today's farmers, such as plows and disc harrows, subsoilers and cultivators. GPT accomplishes all of the above mentioned functions, which are needed to cultivate the soil before and after the harvesting, by simply changing a working device with the dimensions required for each job.

The above facts will have a great repercussion at a macroeconomic level, by virtue of the savings of tons of steel, fuel and other resources that are currently employed by the manufacturers of the aforementioned equipment. Also, GPT has a great impact in the reduction of contaminants originated by the industries that manufacture such equipment.

### BRIEF DESCRIPTION OF THE DRAWINGS

The invention may be understood by reference to the following description taken in conjunction with the accompanying drawings, in which, like reference numerals identify like elements, and in which:
FIG.1: Is the lateral view of the GPT;
FIG. 2: Is a section view taken along lines A-A of FIG. 1;
FIG. 3: Is a perspective view of the GPT;
FIG. 4: Is a section view taken along lines B-B of FIG. 3;
FIG. 5: Is a perspective view of the GPT;
FIG. 6: Is an exploded view of the GPT;
FIG. 7: Is a lateral view of the GPT;
FIG. 8: Is a front view of the GPT in a working position; and
FIG. 9: Is a front view of the GPT in transport position.

### DETAILE DESCRIPTION OF THE INVENTION

GOAL PLOW TECHNOLOGY (GPT) represents the technological implementation of a new physical and biological concept for the tillage of agricultural lands. GPT includes a group of combined devices and a revolutionary method for working the earth that allows for a greater development of the physical and biological potential of the soil.

The scientific bases of GPT are sustained by the fact that the soil's layers were formed by Nature, not like books placed on a bookshelf: vertically, but rather like cake layers placed: horizontally. Therefore the behavior of the ground like an anisotropic system is accentuated, which means that its physical and biological properties may drastically vary, according to the direction of movement: horizontal or vertical.

As previously stated, GPT cuts the ground horizontally, which is the direction of least resistance, and follows the same direction as the ground layers were formed by Nature.

GPT's angles and devices have been carefully studied and researched. Any apparently insignificant change produces an adverse effect in the soil's physical and biological behavior.

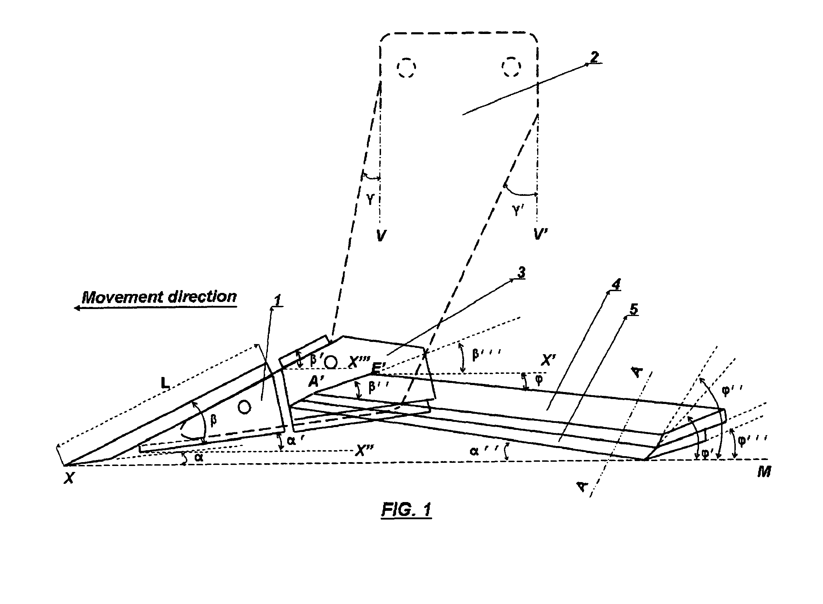

The GPT includes a system of symmetrical devices (FIG. 1) connected to a vertical arm 2 through a connection member 3 which may be formed as a wedge. The scarifier 1 is fastened to the lower front end of the vertical arm 2. The sharpened beveled blade supports 4 are attached, by welding or smelting, to the aforementioned connection member 3, forming an angle β" of approximately 26 to 32 degrees. The extension of the line A'E' (FIG. 1) cuts the line X', which is parallel to an horizontal plane XM, describing an angle β"' of approximately 12 to 19 degrees and an angle ϕ of approximately 4 to 7 degrees, formed by the upper edge of the blades support 4 with X'.

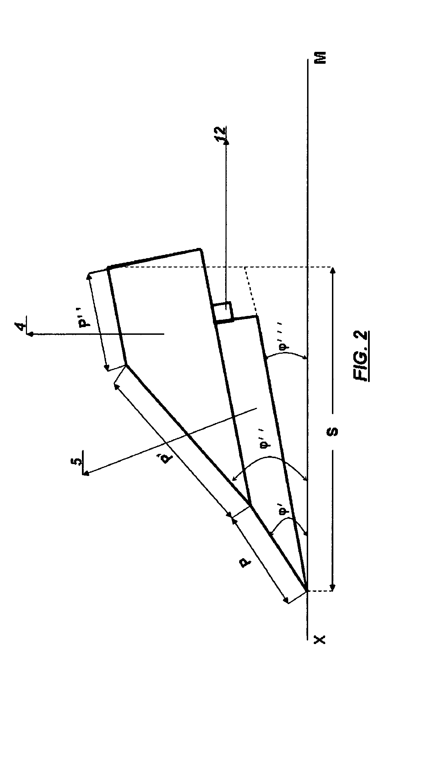

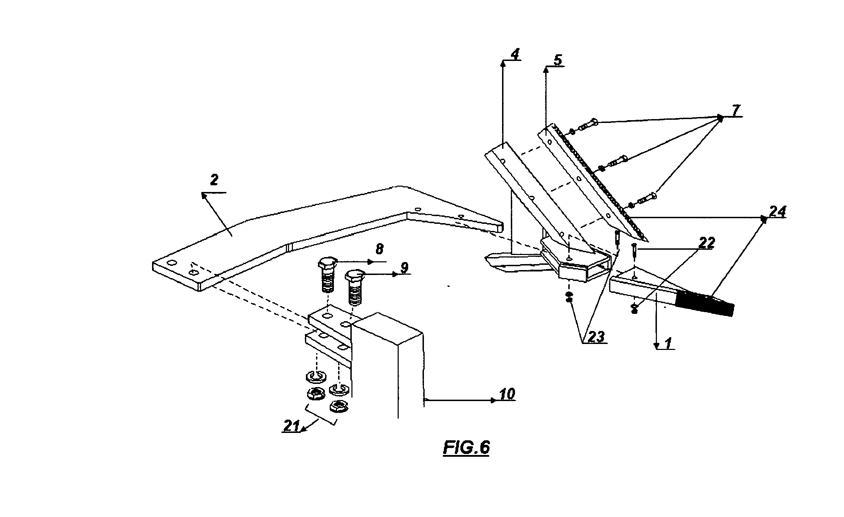

The cut blades 5 fasten by a first fastening device 7 such as screws and washers (FIG. 6) below the support 4, forming the angles α" of approximately 4 to 7 degrees (FIG. 1) and ϕ"' of approximately 8 to 16 degrees with horizontal plane XM (FIG. 2). The scarifier 1 and the connection member 3 are secured to a vertical arm 2 through a second fastening device 22 and a third fastening device 23 which may be screws, nuts and washers.

The connection of the blades support 4 with the cut blades 5 describes with plane XM the angles ϕ" and ϕ', respectively, which keep a difference between each other of approximately 5 to 10 degrees so that ϕ">ϕ' (FIG. 1 and FIG. 2) and the sliding planes P, P' and P" keep the following relation P'>P≥P".

The support member 12 which may be formed as square tops (FIG. 2) are fastened one support member 12 to each end and one support member 12 to the center, behind the cut blades 5, and having a thickness no greater than the aforementioned blades 5, and a length approximately three times greater than the square tops width.

GPT includes the vertical scarifier 1 (FIG. 1) of geometrical characteristics which is coupled, through the connection member 3, to the lower end of the vertical arm 2 with an angle of cut β that varies approximately between 14 and 19 degrees and adapts in such a manner that, as angle β diminishes, the length (L) of the scarifier 1 in the direction of movement increases, in an inversely proportioned relation of the sine of this angle, in accordance with the mathematical expression L = 10 x 1/sinβ.

The connection of the vertical arm 2 and the scarifier 1 is made in such a way that describes an angle α and another α', that form, between horizontal XM and the scarifier'2 front lower edge, with vertex on X, and between the scarifier's bottom and the horizontal X" respectively, oscillating between approximately 4 and 7 degrees.

The angle β' formed by the horizontal X"' and the upper line of the connection member 3, is approximately 5 to 10 degrees higher to the scarifier 1 angle β, located in the front end of the set (FIG.1).

The front profile of the vertical arm 2 forms an angle γ with vertical V and its back profile forms an angle γ' with the vertical V' so that γ/γ'≈0.6.

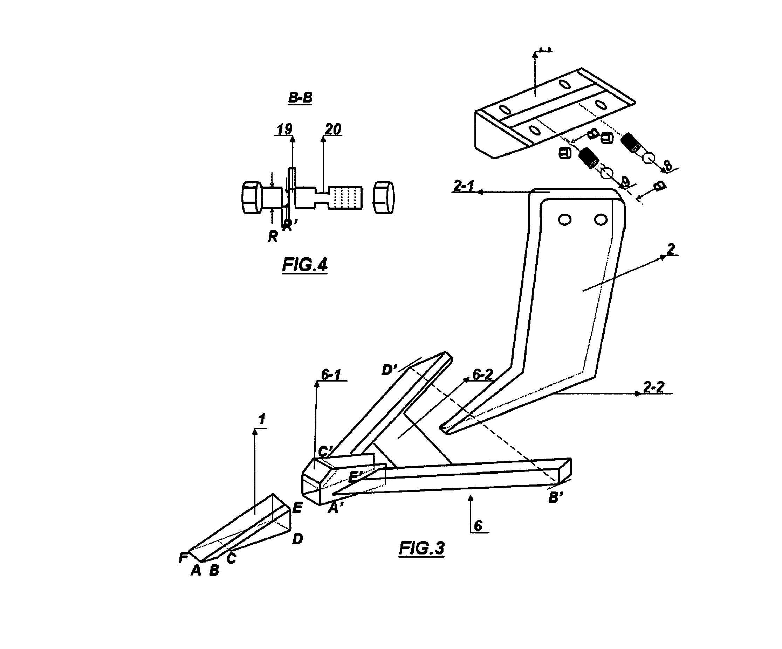

All the parts of the GPT set are detachable and independent of each other (FIG. 3 and FIG. 6) and the system of the connection of the horizontal cut member 6 with their vertical arm 2 includes an irregular geometric member (6-1), which includes two unequal rectangle members (one of which is located at the bottom and the other on the upper part of the device) and includes two irregular polygons members of substantially the same measurement located one in front of the other in a lateral position.

The angles formed by segments AB and A'B' with the horizontal (FIG. 3) correspond respectively with angles α and α", as shown in (FIG. 1), and the angle formed by segment C'D' with the horizontal, having its vertex on D', is equal to the previous ones and their 3 vertices that are located on the same horizontal plane.

The GPT's angles formed by a first segment defined by A'B' and a second segment defined by C'D' with the horizontal (FIG. 3), and whose vertices are located in B' and D', are characterized by its concave side projecting in the same direction of the movement, and this contributes to the equipment's stability.

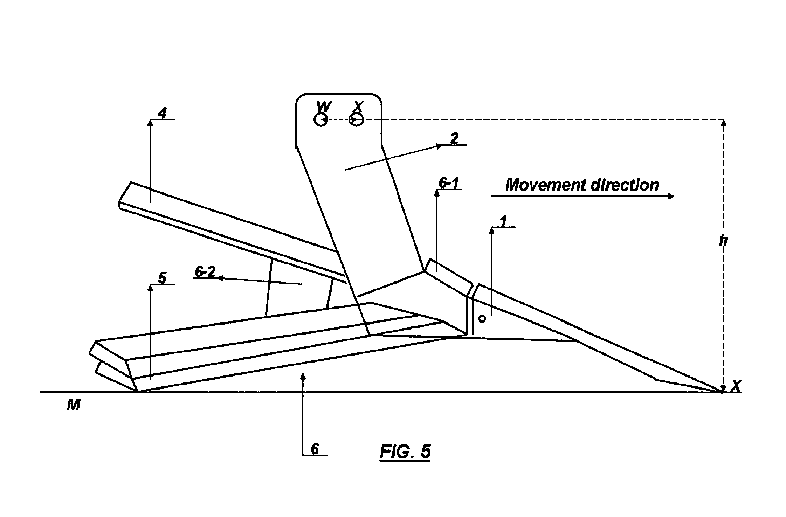

Vertical arm 2 affixes to support 11 by a fourth fastening device which may be screw 8 and screw 9, so that screw 9, in the forward position, functions as a protector against impact, and screw 8 works as a pivot point (FIG. 3 and FIG. 6). The distance between 8 and 9 is represented by segment WX (FIG. 5) is substantially 1/5 the height (h), (FIG. 5) so that WX/h =1/5.

All surfaces of GPT's work devices that are exposed to soil-metal friction are protected by a material resistant protective layer to prevent the wear, which allows it to have long life utility. An example is found in protective layer 24 (FIG. 6).

The screw 9 (FIG. 4) in a forward position has a double groove 19 and 20 (FIG. 4) that generates planes of shear, created as a result of relation R'/R = 3/4.

The horizontal device of sectional cut member 6 (FIG. 3) has a substantially trapezoidal element 6-2 that is attached to its front third behind the vertical arm 2 (FIG. 5), with an inclination of approximately 5 to 7 degrees in respect to the horizontal plane, and with the convex side in the opposite direction of the movement, working as a subterranean leveler of the surface of the ground.

The lower profile (2-2) (FIG. 3) describes an angle with vertex in its front end, with a magnitude of approximately 5 to 10 degrees with respect to the horizontal plane, as long as the upper profile (2-1) is in parallel position in respect to this plane.

The horizontal device of horizontal cut member 6 (FIG. 3) is characterized by the looseness of its mechanism of connection with vertical arm 2 and scarifier 1, allows it to move in a range of approximately ±3 degrees in respect to the horizontal plane and to react in a flexible way according to the changes in the consistency of the soil.

The horizontal cut device 6 (FIG. 3) has the width of the cut, represented by segment D'B', is approximately 10 to 16 times greater than the width of cut of the vertical scarifier 1 (FIG. 3), represented by the segment of front cut FA, so that 16≥D'B'/FA>10.

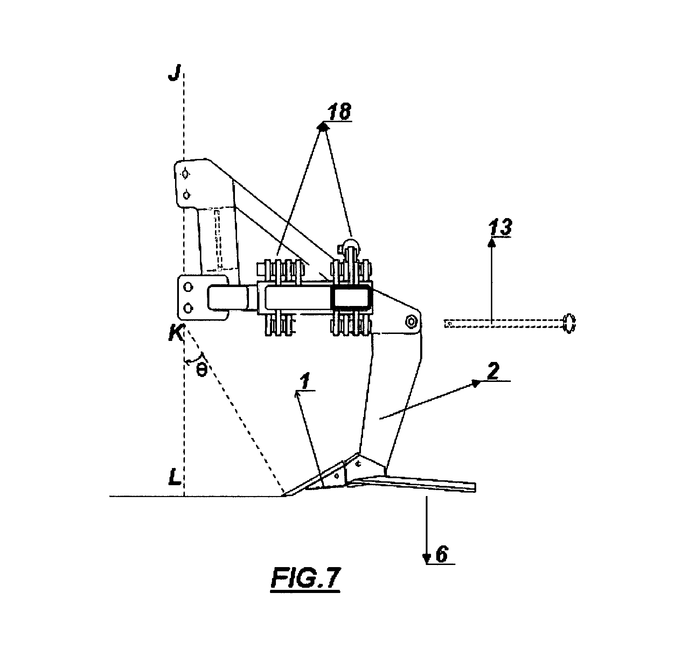

The GPT has the relative position of the front end of vertical scarifier 1 (FIG. 7) formed by angle θ, conformed by line JKL, with vertex in K, with a value that may vary from approximately 0 to 55 degrees, for the models of integral connection to the tractor (Three Point Hitch System).

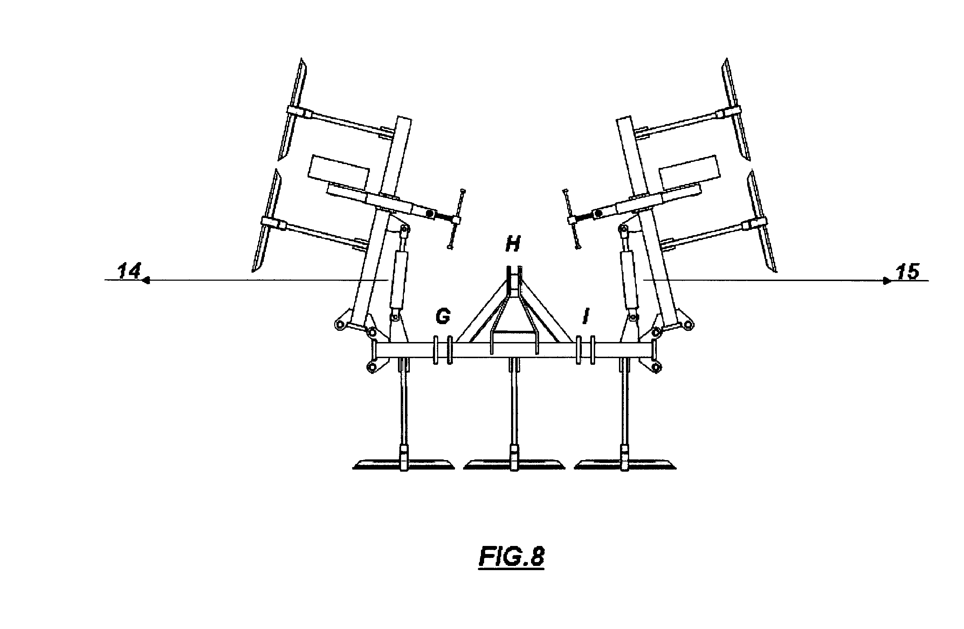

Line JKL (FIG. 7) crosses through the center of the connecting points of the tractor, identified by the letters GHI (FIG. 8), which are located in the same plane in respect to the vertical.

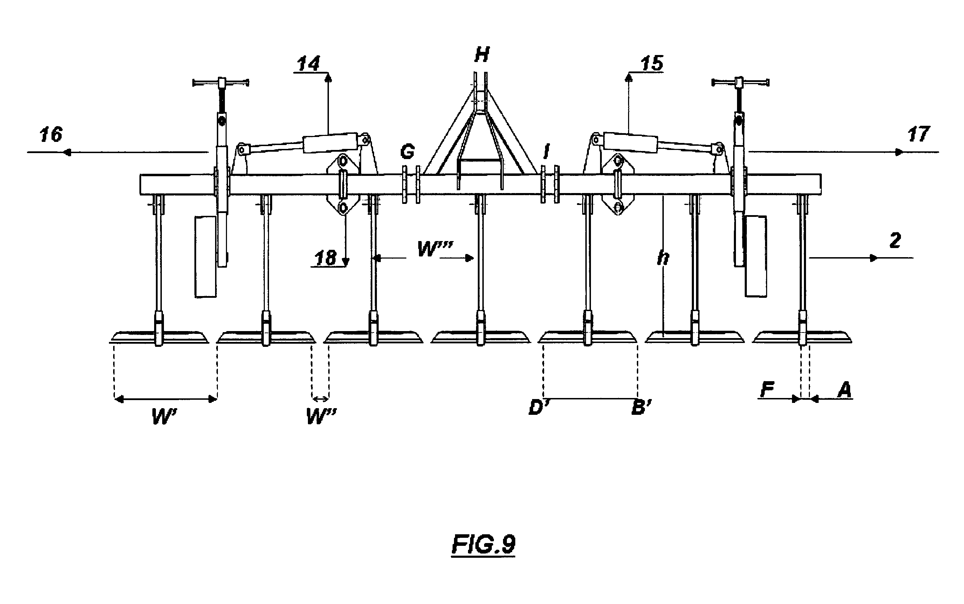

The width of work of the device, represented by line D'B' (FIG. 9), is an approximate relation of 1:1, with respect to height (h), so that the relation h/D'B' has an approximate value to the unit

The GPT has an approximate distance between the vertical arms W"' (FIG. 9) of approximately eight times greater to the separation between the horizontal plane W", so that W"'/W">8.

The GPT includes modular working parts and all have the same angles and dimensions, independent of the appropriate model for each range of power of the tractor.

The GPT provides the cut of the soil anywhere along the edge of the cut and blade 5 (FIG. 1) is made in different planes which are parallel to the surface of the ground, preventing the compaction of the bottom work surface.

GPT is characterized by the relation between the addition of the contact surface at the soil-metal interface throughout the sliding planes, P, P', P" (FIG. 2) and the effective work width W' (FIG. 9) which is about 16.

The GPT positions the horizontal cut member 6 to be located in an independent way, behind the vertical scarifier 1 (FIG. 1) from an approximate distance equal to a third (1/3) of the total length of the GPT set, measured in a straight line from its front end to the back end, in opposite direction of the movement.

The GPT has the cutting angle of cut blade 5 (FIG. 2) represented by the difference ϕ'-ϕ"' varies from approximately 14 to 25 degrees. It conforms itself in such a way that while it diminishes, its P length, calculated in centimeters, is increased in a relation proportionately inverse to the size of (ϕ'-ϕ"'), according to the mathematical expression: P=1.2 x 1/sin(ϕ'-ϕ"').

The GPT has the angle of the beveled blade support 4, represented by the difference ϕ"-ϕ"', which varies from approximately 19 to 30 degrees, and conforms itself in such a way that while it diminishes, its P' length, calculated in centimeters, is increased in a relation proportionately inverse to the sine of (ϕ"-ϕ"'), according to the mathematical expression: P'=2.5 x 1/sin(ϕ"-ϕ"').

The GPT has in accordance with (FIG. 2), the relation of the sum of longitudes of facing planes (soil - metal) P, P' and P", with the longitude of opposite plane S, having an approximate value lesser than 1.18, so that (P + P' + P")/S<1.18 (FIG. 2).

FIG. 7 shows a lateral view of GPT, mounted on a frame articulated and including: vertical scarifier 1, horizontal cut member 6, and vertical arm 2. The joint member 18 is affixed into its working position by bolt 13. FIG. 8 shows a front view of the joint member 6 in the transport position, which is propelled by hydraulic cylinders 14 and 15, when journeying by narrow passageways.

The articulated model is recommended for high powered tractors. The connection to the tractor is made through a there point hydraulic system: GHI. However, other hydraulic systems could be employed. The working depth is regulated through the tires and spiral screws 16 and 17 (FIG. 9), where a front view of GPT is shown as an example, with 7 sets of devices, joined by an articulated frame. There are different models in order to include the total range of tractors from approximately 50 to 250 HP.

The speed of the soil's displacement while working, with respect to planes P', P", and P"' (FIG. 2), is approximately more than 8 to 18% of the GPT's speed, with respect to the work bottom. This creates a turbulence that makes for the favorable interment of the weeds' seeds, without inverting the grounds' layers, to depths that prevent its sprouting. The aforementioned turbulence provokes the separation of the soil's particles and increases the quantity of macro-pores, creating a "valve effect" that allows the rain or irrigation water to penetrate and be stored at the subsoil, but prevents that the water be carried up by its capillarity and evaporate at the surface. This allows a more efficient use of the rain and irrigation water, with a savings of more than 25% of such a valuable resource. This phenomenon also has a preventive effect, with reference to the soil's compaction and over the germination of the weeds' seeds that stay near the earth's surface.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed.

What I claim as my invention is a modernized technology in the field of biological farming for agricultural soils; it includes a set o devices and a recently developed method for agronomy.

## Claims

1. A Goal Plow Technology GPT system, comprising:
a vertical arm (2);
a vertical scarifier (1);
a connection member (3) to connect the vertical arm (2) to the vertical scarifier (1);
a blade support member (4) to support cut blades (5) and forming an angle β" of approximately 26 to 32 degrees.

2. A Goal Plow Technology GPT system as in claim 1, wherein blade support (4) with the cut blades (5), describing with plane XM, the angles ϕ" and ϕ', which respectively maintain a difference of approximately 5 to 10 degrees, so that ϕ">ϕ', and the sliding planes, P, P' and P", keep the following relation: P'>P≥P".

3. A Goal Plow Technology GPT system as in claim 1, wherein the vertical scarifier (1) to a lower end of the vertical arm (2), with an angle of cut β that oscillates between approximately 14 and 19 degrees and adapts in such a manner that, as it diminishes, its length (L) in the direction of movement it increases, in an inversely proportioned relation to the sine of this angle, in accordance with the mathematical expression L=10x1/sinβ.

4. A Goal Plow Technology GPT system as in claim 1, wherein the vertical arm (2) and scarifier (1) form an angle α and an angle α' that form between horizontal XM and the front lower cutting edge of the scarifier, with vertex in X and between its bottom and the horizontal X" respectively, with a value oscillating between approximately 4 and 7 degrees.

5. A Goal Plow Technology GPT system as in claim 1, wherein an angle β', is formed by horizontal X"' and the upper line of the connection member (3), is substantially 5 to 10 degrees above angle β of the scarifier (1).

6. A Goal Plow Technology GPT system as in claim 1, wherein a front profile of the vertical arm (2) forms an angle γ with the vertical V and a back profile of the vertical arm, forms an angle γ' with the vertical V' so that γ/γ"≈0.6.

7. A Goal Plow Technology GPT system as in claim 1, wherein all of the GPT's parts are detachable and independent of each other and the system of connection of the horizontal cut device (6) with vertical arm (2) includes an irregular geometric member (6-1) having two unequal rectangles plus two irregular polygons of approximately the same measurement located one in front of the other in a lateral position wherein the angles formed by segments AB and A'B' and the angle formed by segment C'D' with the horizontal correspond respectively with angles α and α' and the angle formed by segment C'D' with the horizontal, with a vertex of D', is equal to the previous ones and its three vertices are situated in the same horizontal plane.

8. A Goal Plow Technology GPT system as in claim 7, wherein the angles formed by segments A'B' and C'D', with the horizontal, and having vertices located at B' and D', having a concave side being projected in the same direction as the movement and contributes to the equipment's stability.

9. A Goal Plow Technology GPT system as in claim 1, wherein the vertical arm (2) is connected to a support member (11) by a first screw and a second screw (8 and 9), and wherein the second screw (9), in a forward position protects against impact, and the first screw (8) forms a pivot point and wherein the distance between the first screw and the second screw (8 and 9) represented by segment WX (FIG. 5) is 1/5 the height (h), so that WX/h=1/5.

10. A Goal Plow Technology GPT system as in claim 9, wherein the second screw (9) in the forward position has a double groove (19 and 20) that generates planes of shears, created as a result of relation R'/R=3/4.

11. A Goal Plow Technology GPT system as in claim 7, wherein the GPT includes a horizontal cut member (6) and is connected to the vertical arm (2), with an inclination of approximately 5 to 7 degrees with respect to the horizontal plane, and its convex side in the opposite direction to the movement and wherein the horizontal cut member functions as a subterranean leveler of the soil's surface.

12. A Goal Plow Technology GPT system as in claim 1, wherein the vertical arm (2) forms an angle with vertex in its front end, having a magnitude of approximately 5 to 10 degrees, with respect to the horizontal plane.

13. A Goal Plow Technology GPT system as in claim 7, wherein the horizontal cut member (6) is connected to the vertical arm (2) and the scarifier (1), allowing for movement in a range of +3 degrees, with respect to the horizontal plane and reacts in a flexible manner, according to the changes in the consistency of the soil.

14. A Goal Plow Technology GPT system as in claim 13, wherein the horizontal cut member (6) includes a width of the cut represented by segment D'B', and is approximately 10 to 16 times higher than the width of the cut of the vertical scarifier (1), represented by the segment of the front cut FA so that D'B'/FA 10≤16.

15. A Goal Plow Technology GPT system as in claim 1, wherein a front end of vertical scarifier (1) may be determined by angle θ, conformed by line JKL, with vortex in K, with a value that may vary from approximately 0 to 55 degrees.

16. A Goal Plow Technology GPT system as in claim 15, wherein the line JKL (FIG. 7), crosses through the center of the connecting points of a tractor.

17. A Goal Plow Technology GPT system as in claim 14, wherein a width of work of the device, represented by lines D'B', is an approximate relation of 1:1 with respect to the height (h), so that the relation h/D'B' has an approximate value to the unit.

18. A Goal Plow Technology GPT system as in claim 14, wherein the distance between two adjacent vertical arms W"' is approximately eight times higher than the separation between horizontal parts W", so that W"'/W"=8.

19. A Goal Plow Technology GPT system as in claim 1, wherein the cut of the soil at each point along the edge of cut blade (5), cuts the soil in different planes, which are parallel to the surface of the soil, preventing the compaction at the work bottom.

20. A Goal Plow Technology GPT system as in claim 1, wherein the relation between the addition of the faying surface and the interface soil-metal throughout the sliding planes of P, P' and P", and the effective work width of W' is about 16.

21. A Goal Plow Technology GPT system as in claim 1, wherein the horizontal cut member (6) is located behind the vertical scarifier (1) from a distance equal to approximately a third (1/3) of the overall length, measured in a straight line from its front end to the back end, in the opposite direction of the movement.

22. A Goal Plow Technology GPT system as in claim 1, wherein a cutting angle of the cut blade (5) is represented by the difference ϕ'-ϕ"' and varies from approximately 14 to 25 degrees and wherein the cut blade angle diminishes, a P length of the cut blade is increased, calculated in centimeters, in an inversely proportional relation to the sine of (ϕ'-ϕ"'), according to the mathematical expression: P=1.2x1/sin(ϕ'-ϕ"').

23. A Goal Plow Technology GPT system as in claim 1, wherein an angle of the bevel of the blade support (4) represented by the difference ϕ"-ϕ"', varies from approximately 19 to 30 degrees and wherein the blade support angle diminishes, its P' length increases, in an inversely proportional relation to the sine of (ϕ"-ϕ"'), according to the mathematical expression P'=2.5x1/sin(ϕ"-ϕ"').

24. A Goal Plow Technology GPT system as in claim 2, wherein to a relation of the sum of longitudes of facing planes (soil - metal) P, P' and P", with the longitude of opposite plane S, having a lesser value of approximately 1.18 so that (P+P'+P")/S<1.18.

25. A Goal Plow Technology GPT system as in claim 24, wherein the sliding speed of the ground during work, with respect to planes P, P' and P" surpasses approximately 8% to 18%, with respect to the work bottom, creating a turbulence that favors the internment of the weeds' seeds and avoids the soil's compaction.

26. A Goal Plow Technology GPT system as in claim 1, wherein the blade support member (4) extension by side A'E' cuts to the parallel line of horizontal X', describing angle β"' of approximately 12-19 degrees.

27. A Goal Plow Technology GPT system as in claim 2, wherein the blade support member (4) forms an angle ϕ of approximately 4 to 7 degrees, formed by the upper edge of the blades support with X'.

28. A Goal Plow Technology GPT system as in claim 3, wherein the cut blades (5) form the angles α" of approximately 4 to 7 degrees and ϕ"' of approximately 8 to 16 degrees with horizontal plane XM.

29. A method of application of GPT, including the following steps:
a) cutting horizontally the soil as to a depth of 5 to 27" depending upon the type of culture, predominant weeds, and the compaction degree of the soil. The work must be cone immediately after the harvest, before the soil dries up, and becomes compacted.
b) whenever possible, the use of any other traditional implement should be avoided, such as disc harrows or subsoilers, which make a vertical cut in the ground, provoking dust formation, cracks, and lumps, the stimulation of weed's growth, and loss of the soil's humidity.
c) when the surface of the ground is require to be leveled and uniform, conventional rolls or tubes may be connected behind the GPT, thereby obtaining a combined work result, which leaves the soil in optimal working condition to do the sowing in a single passing.
d) the work of mechanical weeding, between the rows of culture, is done by GPT, with the adequate width for that type of labor, avoiding the use of any other implement now used, this being achieved through a scaled reduction of the device described in claim 1, corresponding to the sowing distance of each culture.
e) the angle α and α', in accordance with claim 4, with a value of 4 to 7 degrees, should be regulated at the interval of 4 to 10 degrees, utilizing the tractor's third point, (adjusting bar), in such a manner that, depending upon the consistency of the ground's surface, and the increase in the turbulence flow of the soil's particles, this causes the weed's seeds to drop to depths that prevent its sprouting.
